# EUROPÄISCHE PATENTSCHRIFT

(11) **EP 2 072 967 B1**
(45) Veröffentlichungstag und Bekanntmachung des Hinweises auf die Patenterteilung: **17.03.2010**
(21) Anmeldenummer: 08015398.4
(22) Anmeldetag: 01.09.2008
(51) Int. Cl.: G01D 11/24

(54) **Elektronischer Sensor und Verfahren zur Herstellung eines Sensors**
Electronic sensor and method for manufacturing a sensor
Capteur électronique et procédé de fabrication d'un capteur

(30) Priorität: 04.09.2007 EP 07017332
(43) Veröffentlichungstag der Anmeldung: 24.06.2009
(73) Patentinhaber: Pepperl + Fuchs GmbH, 68307 Mannheim (DE)
(72) Erfinder: Berg, Eckhard, 67269 Grünstadt (DE)
(74) Vertreter: Schiffer, Axel Martin

(56) Entgegenhaltungen:
- DE-A1- 10 013 218

## Beschreibung

Die vorliegende Erfindung bezieht sich in einem ersten Gesichtspunkt auf einen elektronischen Sensor nach dem Oberbegriff des Anspruchs 1.

In einem weiteren Aspekt betrifft die Erfindung ein Verfahren zur Herstellung eines Sensors.

Ein gattungsgemäßer elektronischer Sensor ist beispielsweise in DE 102 37 904 B4 offenbart und weist folgende Komponenten auf: Eine Gehäusehülse, ein Sensorelement zum Messen einer physikalischen Messgröße, welches an einem Messende der Gehäusehülse angeordnet ist, eine in der Gehäusehülse angeordnete elektronische Baugruppe und ein Anschlussstück, welches an einem dem Messende gegenüberliegenden Anschlussende der Gehäusehülse angeordnet ist.

Derartige Sensoren werden bei einer großen Vielzahl von Einsatzbereichen im industriellen Bereich verwendet.

Elektronisch arbeitende Sensoren sind in der Regel so aufgebaut, dass mindestens eine elektronische oder elektromechanische Baugruppe in einem Gehäuse montiert ist, das seinerseits wieder aus mehreren Teilen besteht, um eine kostengünstige Montage der Funktionskomponente aus mehreren Richtungen zu ermöglichen. Das hat den Nachteil, dass die Gehäuseteile während der Fertigung miteinander verbunden und alle Gehäuseöffnungen nach der Montage verschlossen werden müssen. Das ist insbesondere dann unvorteilhaft, wenn die Sensoren in sogenannten Feuchtapplikationen eingesetzt werden sollen, in denen an die Dichtigkeit der Gehäusezusammenfügungen besonders hohe Ansprüche gestellt werden.

In DE 100 13 218 A1 wird vorgeschlagen, die Gehäusehülse eines gattungsgemäßen Sensors, in welche das Sensorelement, die elektronische Baugruppe und das Anschlussstück eingesetzt sind, zumindest teilweise mit einer Formmasse zu verfüllen, um die Elektronik vor Feuchtigkeitseinwirkungen zu schützen.

**Aufgabe** der Erfindung ist es, einen elektronischen Sensor der oben genannten Art bereitzustellen, der einfach herzustellen ist und bei dem verbesserte Dichtigkeitseigenschaften erreicht werden. Außerdem soll ein Verfahren zur Herstellung eines Sensors mit den genannten Eigenschaften angegeben werden.

Diese Aufgabe wird in einem ersten Aspekt durch den elektronischen Sensor mit den Merkmalen des Anspruchs 1 und in verfahrensmäßiger Hinsicht durch das Verfahren mit den Merkmalen des Anspruchs 18 gelöst.

Bevorzugte Ausführungsbeispiele des erfindungsgemäßen elektronischen Sensors und vorteilhafte Varianten des erfindungsgemäßen Verfahrens sind Gegenstand der abhängigen Ansprüche.

Ein elektronischer Sensor der oben angegebenen Art ist erfindungsgemäß dadurch weitergebildet, dass die Gehäusehülse mit einer Innenauskleidung aus Kunststoff versehen ist, welche am Messende der Gehäusehülse geschlossen ist, und dass die Innenauskleidung bis zum Anschlussende der Gehäusehülse soweit durchreicht, dass sich das Anschlussstück mit der Innenauskleidung in einem dichtungsmäßigen Eingriff befindet.

Bei dem erfindungsgemäßen Verfahren zur Herstellung eines Sensors wird eine Gehäusehülse mit einer Innenauskleidung versehen, wobei die Innenauskleidung an einem Messende der Gehäusehülse geschlossen ist und bis zu einem dem Messende gegenüberliegenden Anschlussende der Gehäusehülse durchreicht. Weiterhin wird ein Sensorelement zum Messen einer physikalischen Messgröße und eine elektronische Baugruppe in die Gehäusehülse eingeführt, ein Anschlussstück wird an das Anschlussende der Gehäusehülse angesetzt und eine Verbindung wird zwischen dem Anschlussstück und dem Anschlussende der Gehäusehülse so hergestellt, dass das Anschlussstück mit der Innenauskleidung in einen dichtenden Eingriff kommt.

Als Kerngedanke der Erfindung kann angesehen werden, einen elektronischen Sensor so aufzubauen, dass die Zahl der abzudichtenden Übergänge im Vergleich zum Stand der Technik reduziert wird. Insbesondere wird erfindungsgemäß ein elektronischer Sensor vorgeschlagen, bei dem im Wesentlichen nur ein abzudichtender Übergang vorhanden ist.

Ein weiterer Kerngedanke der Erfindung besteht in diesem Zusammenhang darin, die Zahl der zu verbindenden Komponenten möglichst gering zu halten, so dass der Herstellungsaufwand auch in dieser Hinsicht reduziert werden kann.

Ein wesentlicher Vorteil der Erfindung kann darin gesehen werden, dass wegen der im Vergleich zum Stand der Technik reduzierten Zahl von abzudichtenden Übergängen deutlich verbesserte Dichtigkeitseigenschaften erzielt werden. Der erfindungsgemäße Sensor ist deshalb besonders vorteilhaft für Anwendungen im Hygienebereich, beispielsweise in der lebensmittelverarbeitenden Industrie.

Eine erhebliche Verbesserung im Vergleich zum Stand der Technik wird durch das Merkmal erreicht, dass die Innenauskleidung der Gehäusehülse am Messende geschlossen ist, so dass vom Messende keine Dämpfe oder sonstigen Verunreinigungen in das Innere des Sensors eindringen können.

Im Wesentlichen besteht das Sensorgehäuse demnach aus zwei Teilen, die beim Zusammenbau zusammengefügt werden müssen, nämlich die Gehäusehülse mit der Innenauskleidung sowie das Anschlussstück, welches mit der Gehäusehülse zu verbinden ist. Die Gehäusehülse mit der Innenauskleidung kann auch als Basisgehäuse und das Anschlussstück kann auch als Deckel bezeichnet und angesehen werden.

Die Erfindung kann grundsätzlich für alle Arten von Sensoren, beispielsweise induktive, kapazitive, optische, Ultraschall- oder Temperatursensoren, verwendet werden. Besonders vorteilhaft kann die Erfindung aber für Sensoren eingesetzt werden, bei denen die am Messende geschlossene Innenauskleidung keine weiteren konstruktiven Aufgabenstellungen mit sich bringt. Dies ist insbesondere bei induktiven Sensoren der Fall.

Prinzipiell können das Basisgehäuse und der ihm zugeordnete Deckel beliebige Formen haben. Besonders bevorzugt weist aber die Gehäusehülse eine im Wesentlichen zylindrische Form auf. Hierbei kann es sich wiederum grundsätzlich um Zylinder mit beliebiger Grundfläche handeln. Zweckmäßigerweise weist jedoch die Gehäusehülse eine Zylinderkreisform auf, wobei insbesondere auf der Außenseite der Gehäusehülse ein Gewinde zum Befestigen und gegebenenfalls zum Justieren des Sensors in einer Halterung vorhanden ist. Im Wesentlichen weist das Gehäuse also eine Zylinder- oder Rohrform auf.

Prinzipiell kann die Gehäusehülse aus einem beliebigen Material, beispielsweise auch aus Kunststoff, gefertigt sein. Bei bevorzugten Varianten sind jedoch das Basisgehäuse, also die Gehäusehülse, und mindestens Teile des Deckels, aus Metall gebildet, wobei diese Komponenten auf ihren Innenseiten vollständig oder nur teilweise mit Kunststoff ausgekleidet sein können.

Damit ein Durchtritt von Gasen, insbesondere von Wasserdampf, durch die Innenverkleidung möglichst weitgehend reduziert wird, ist die Innenauskleidung bevorzugt aus einem Material mit geringer Dampfdiffusionsrate gebildet. Besonders vorteilhaft können für die Innenauskleidung Materialien verwendet werden, bei denen die Dampfdiffusionsraten um etwa einen Faktor 10 bis 100, also um ein bis zwei Größenordnungen, unter den Werten von standardmäßig eingesetzten Materialien, wie beispielsweise Polyamiden, liegen.

Beispielsweise können für die Innenauskleidung LCP-Materialien (Liquid Crystal Polymere) verwendet werden, die sich durch besonders niedrige Dampfdiffusionsraten, insbesondere niedrige Wasserdampftransmissionsraten und niedrigen Sauerstoff-Permeabilitäten, auszeichnen.

Besonders zweckmäßig werden Materialien eingesetzt, bei denen die Wasserdampftransmissionsrate kleiner ist als 0,1 g x mm/ m² x Tag, besonders bevorzugt kleiner als 0,01 g x mm/ m² x Tag, und/oder bei denen die Sauerstoff-Permeabilität kleiner ist als 0,1 cm³ x mm/m² x Tag x atm, besonders bevorzugt kleiner als 0,01 cm³ x mm/m² x Tag x atm.

Besonders vorteilhaft kann der erfindungsgemäße Sensor für hygienisch anspruchsvolle Anwendungen, z.B. in der Lebensmitteltechnik, eingesetzt werden.

Bei einer weiteren vorteilhaften Ausgestaltung weist das Anschlussstück eine mit der Gehäusehülse zu verbindende Anschlusshülse und einen Anschlusskörper aus Kunststoff auf. Die Anschlusshülse ist dabei zweckmäßig aus Metall gefertigt. Der Anschlusskörper kann auch als Innenauskleidung der Anschlusshülse bezeichnet und angesehen werden. Bei dieser Ausgestaltung der Erfindung sind dann beim Zusammenbau des Sensors im Wesentlichen nur zwei Metallteile, nämlich die Gehäusehülse und die Anschlusshülse, miteinander zu verbinden, so dass vereinfacht betrachtet das Sensorgehäuse im Wesentlichen aus zwei Teilen, nämlich dem Basisgehäuse und dem Deckel, besteht.

Im Prinzip kann auch ergänzend oder alternativ eine Verbindung zwischen dem Anschlusskörper und der Gehäusehülse und/oder der Innenauskleidung vorgesehen sein. Wichtig ist gemäß der Erfindung, dass das Anschlussstück in irgendeiner Weise mit der becherartigen Innenauskleidung der Gehäusehülse abdichtet.

Grundsätzlich kann das Anschlussstück als oder mit einem Kabelabgang oder als oder mit einem Steckverbinder gebildet sein. Für die Ausführungsvariante als Kabelabgang muss für eine Abdichtung zwischen dem Kabel und dem Anschlusskörper gesorgt werden.

Eine Möglichkeit zur Abdichtung des Kabelausganges ist, am Anschlusskörper Dichteinrichtungen zum abgedichteten Ausführen des Kabels vorzusehen. Diese können direkt einstückig als Teile des Anschlusskörpers ausgebildet sein.

Um eine sichere Befestigung des Kabels innerhalb des Sensors zu erreichen, ist bevorzugt vorgesehen, dass im Anschlusskörper zugentlastende Elemente vorhanden sind. Diese können beispielsweise in Form einer zweiteiligen Hülse ausgeführt sein, die um das Kabel gelegt wird und in den Anschlusskörper eingesetzt wird. In diesem Zusammenhang ist es bevorzugt, wenn sowohl die Dichteinrichtungen wie auch die zugentlastenden Elemente derart ausgebildet sind, dass sich die Dichtwirkung wie auch die Zugentlastung durch Zugkräfte auf das Kabel verstärken.

Die Funktionalität des Sensorgehäuses insgesamt wird erhöht, wenn die Anschlusshülse Ausnehmungen aufweist zum Bilden von Fenstern für optische Informationen aus dem Sensorinneren. Hierbei kann es sich beispielsweise um Status- oder Messinformationen handeln, z.B. "Objekt erkannt" oder "Selbsttest läuft", welche insbesondere über Leuchtdioden, die Teil der elektronischen Baugruppe sein können, abgegeben werden.

Prinzipiell kann die Innenauskleidung ein separates Bauteil sein, welches in die Gehäusehülse hineingesteckt wird. Besonders bevorzugt wird aber die Innenauskleidung in die Gehäusehülse durch Spritzguss eingebracht. Hierdurch wird bereits eine besonders innige Verbindung zwischen der Gehäusehülse und der Innenauskleidung erreicht.

Bei bevorzugten Ausführungsvarianten wird auch der Anschlusskörper in die Anschlusshülse eingespritzt. Dieses Verfahren kann in entsprechender Weise wie das Anbringen der Innenauskleidung in der Gehäusehülse erfolgen.

Bei der Auslegung des Anschlusskörpers ist bevorzugt vorgesehen, dass der Anschlusskörper mit den Ausnehmungen im Anschlussstück eine im wesentlichen lückenlose Verbindung eingeht, damit keine Schmutzkanten oder Keimnester entstehen können. Dies kann besonders einfach bei einem Einbringen des Anschlussstücks durch Spritzgussverfahren erreicht werden.

Um ein Herausleiten von optischen Informationen zu ermöglichen, wird der Anschlusskörper zweckmäßig aus einem lichtleitenden Kunststoff gebildet. Auch die Innenauskleidung der Gehäusehülse kann aus einem transparenten oder lichtleitenden Material gebildet sein. Es können dann optische Informationen auch über die Innenauskleidung, beispielsweise an das Messende und/oder an das Anschlussende geleitet werden.

Das Verbinden der Gehäusehülse mit der Anschlusshülse kann prinzipiell auf beliebige Weise erfolgen. Beispielsweise kann die Anschlusshülse mit der Gehäusehülse verschweißt werden. Bei einfachen Ausführungen können hierzu nur einige wenige Schweißpunkte angebracht werden. Die Dichtigkeit insgesamt kann aber noch weiter erhöht werden, wenn zwischen der Gehäusehülse und der Anschlusshülse eine umlaufende Schweißnaht gebildet ist, welche beispielsweise mittels Laserschweißen erzeugt werden kann.

In mechanischer Hinsicht kann weiterhin bevorzugt sein, wenn die Gehäusehülse und die Anschlusshülse einander überlappen. Einerseits wird dadurch ein Verschweißen erleichtert und andererseits können die Ränder der Gehäuse- und der Anschlusshülse auch so geformt sein, dass die Anschlusshülse beim Zusammenbau des Sensors mit der Gehäusehülse verrastet werden kann. Eine solche Verrastung kann insbesondere für eine erste Fixierung sinnvoll sein, da hierdurch wiederum das Anbringen einer Schweißnaht erleichtert wird.

Die Funktionalität der Innenauskleidung wird erhöht, wenn durch die Innenauskleidung im Bereich des Messendes eine Aufnahme für das Sensorelement gebildet ist. Zweckmäßig wird hierzu ein Innendurchmesser der Innenauskleidung so gewählt, dass ein beispielsweise zylindrisches Sensorelement leicht in die Innenauskleidung eingeschoben werden kann und von dieser geführt und gehalten ist. Ein separater Becher ist dann nicht mehr notwendig.

Das Herausleiten von optischen Informationen kann effektiver erfolgen, wenn eine Leiterplatte der elektronischen Baugruppe in einem Bereich, in dem LEDs angeordnet sind, in den transparenten Anschlusskörper hineinragt.

Beim optionalen Vorsehen von Elementen für die Zugentlastung ist es zweckmäßig, diese ebenfalls transparent auszulegen, um ein gutes Weiterleiten der von den LED ausgesendeten Lichtsignale zu ermöglichen.

Um die Dichtung zwischen den beiden Teilen, also zwischen der Gehäusehülse mit der Innenauskleidung und dem Anschlussstück, zu verbessern, ist zweckmäßig ein Dichtring zwischen der Innenauskleidung und dem Anschlussstück vorhanden. Hierzu kann bevorzugt der Anschlusskörper einen in das Innere der Innenauskleidung hineinragenden Rohransatz aufweisen, dessen Außenseite eine Anlagefläche für den Dichtring bildet. Ein definierter Sitz der Dichtung wird dadurch erleichtert.

Eine weitere Verbesserung der Dichteigenschaften kann in diesem Zusammenhang dadurch erreicht werden, dass ein Innenbereich der Innenauskleidung der Gehäusehülse mit dem Rohransatz in einem Dichtungsbereich überlappt und dass die Innenauskleidung im Dichtungsbereich zum Bilden eines Aufnahmeraums für einen Dichtring eine reduzierte Dicke aufweist. Es können so hervorragende Dichtigkeitseigenschaften erzielt werden.

Eine Alternative oder ergänzende Möglichkeit zum Ausbilden einer Verbesserung der Dichteigenschaften ist es, wenn der Anschlusskörper eine Dichtlippe ausbildet, und an der Innenauskleidung der Gehäusehülse ein mit der Dichtlippe zusammenwirkender Eingriffsbereich vorgesehen ist. Hierbei ist es möglich, die Dichtlippe derart auszubilden, dass, wenn die Anschlusshülse in die Gehäusehülse eingeführt wird, die Dichtlippe leicht in den Innenraum zurückgedrückt wird und im Eingriffsbereich der Innenauskleidung wieder in die ursprüngliche Position zurückgleiten kann. Bei einer derartigen Konstruktion kann die Dichtlippe mit dem Eingriffsbereich zusätzlich als Rasteinrichtung vorgesehen werden, die ein Platzieren der Anschlusshülse in der Gehäusehülse erleichtert und eine zwischenzeitliche Fixierung vor dem Zusammenschweißen der beiden Hülsen ermöglicht.

In einer weiteren Ausführungsform kann zusätzlich als Fortsetzung des Anschlusskörpers in Richtung des Messendes in die Innenauskleidung ein Stützring angebracht werden. Dieser kann zum zusätzlichen Halten und Fixieren der im Sensor vorgesehenen elektronischen Bauelemente dienen.

Weitere Vorteile und Merkmale des erfindungsgemäßen elektronischen Sensors und des erfindungsgemäßen Herstellungsverfahrens werden nachstehend mit Bezug auf die schematischen Figuren erläutert.

Hierin zeigen:
- Fig. 1: Eine Längsschnittansicht eines ersten Ausführungsbeispiels eines erfin- dungsgemäßen elektronischen Sensors;
- Fig. 2: eine Seitenansicht des elektronischen Sensors aus Fig. 1;
- Fig. 3: eine Querschnittsansicht des Sensors aus Fig. 1;
- Fig. 4: in perspektivischer Teilansicht eine Explosionsdarstellung des An- schlussendes des Sensors aus Fig. 1;
- Fig. 5: eine Längsschnittansicht eines zweiten Ausführungsbeispiels eines erfin- dungsgemäßen elektronischen Sensors; und
- Fig. 6: eine Explosionsdarstellung des elektronischen Sensors aus Figur 5.

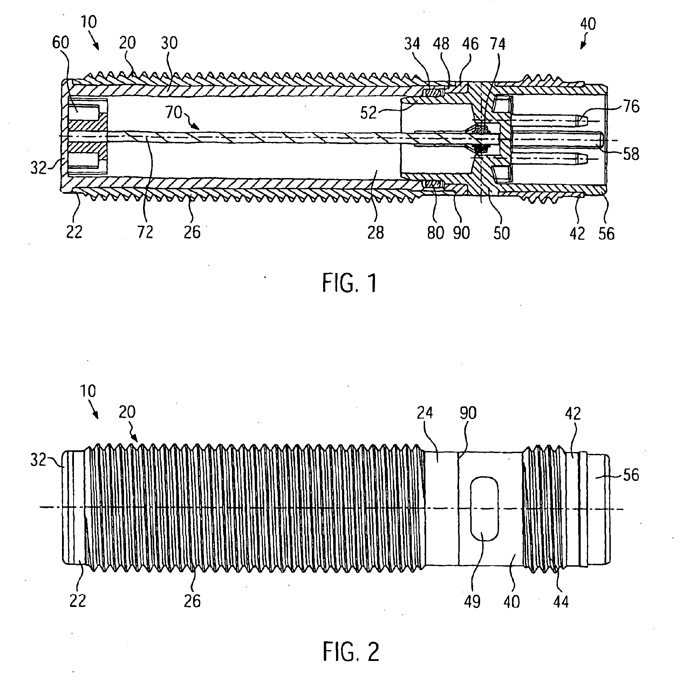

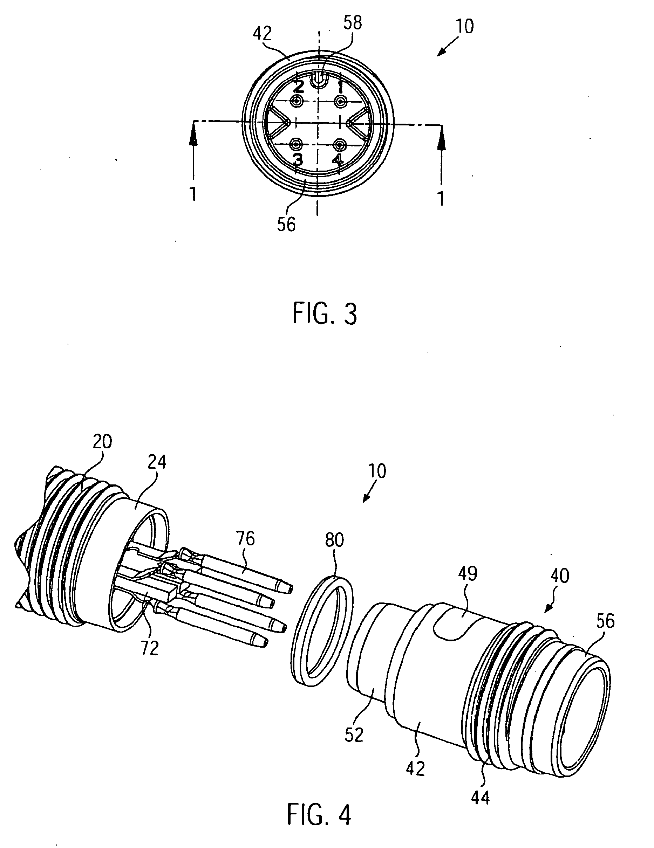

Das in den Figuren 1 bis 4 gezeigte erste Ausführungsbeispiel eines erfindungsgemäßen elektronischen Sensors 10 weist als wesentliche Bestandteile eine Gehäusehülse 20 mit einer durch Spritzguss eingebrachten Innenauskleidung 30 sowie ein Anschlussstück 40 mit einer Anschlusshülse 42 und einem Anschlusskörper 50 auf. Die Komponenten sind in den Figuren jeweils mit denselben Bezugszeichen versehen. Figur 1 ist ein Längsschnitt entlang der Linie 1 - 1 in Figur 3.

Das Anschlussstück 40 ist mit der Gehäusehülse 20 an einem Anschlussende 24 in einer im Folgenden näher beschriebenen Weise verbunden. An einem dem Anschlussende 24 gegenüberliegenden Messende 22 der Gehäusehülse 20 ist ein Sensorelement 60 angeordnet. Im gezeigten Ausführungsbeispiel ist der elektronische Sensor ein induktiver Sensor und dementsprechend handelt es sich bei dem Sensorelement 60 um eine Sensorspule in einem Spulenkörper. Die Innenauskleidung 30 bildet im Bereich des Messendes 22 im dargestellten Ausführungsbeispiel eine Aufnahme für das Sensorelement 60, so dass ein separater Becher für das Sensorelement hier nicht erforderlich ist. Im Inneren 28 der Gehäusehülse 20 ist erfindungsgemäß eine elektronische Baugruppe 70 mit einer Leiterplatte 72 vorhanden. Die Leiterplatte 70 wird am Messende 22 durch das Sensorelement 60 und am Anschlussende 24 durch eine im Anschlusskörper 50 gebildete Aufnahme gehalten. Die Leiterplatte 72 trägt Komponenten einer Sensorelektronik, die nicht im Detail dargestellt sind. Im Bereich des Anschlussendes 24 ragt die Leiterplatte 72 in eine im Anschlusskörper 50 gebildete Aufnahme hinein. Dort sind an einer Ober- und einer Unterseite Leuchtdioden 74 auf der Leiterplatte 72 angeordnet, die zum Anzeigen von optischen Status- und/oder Messinformationen dienen. Die Gehäusehülse 20 und die Anschlusshülse 42 bestehen aus Metall und weisen eine Röhren- oder Kreiszylinderform auf. Auf ihrer Außenseite ist die Gehäusehülse 20 mit einem Gewinde 26 versehen, damit der Sensor 10 in eine Halterung eingeschraubt und dort gegebenenfalls justiert werden kann.

Das Anschlussstück 40 ist im gezeigten Ausführungsbeispiel als Steckverbinder gebildet. Das heißt, dass die Anschlusshülse 42, die auch als Deckel bezeichnet werden kann, und der Anschlusskörper 50, der auch als Kunststoffinnenauskleidung bezeichnet werden kann, so gestaltet sind, dass sie die Gehäuseteile eines Steckverbinders darstellen. Um ein Anschlusskabel befestigen zu können, ist an einer Außenseite der Anschlusshülse 42 ebenfalls ein Gewinde 44 vorhanden.

Gemäß einem wesentlichen Gedanken der Erfindung ist die Innenauskleidung 30 im Bereich des Messendes der Gehäusehülse 20, also des Basisgehäuses, einseitig geschlossen, so dass dort durch die Innenauskleidung 30 ein deckelartiger Abschluss 32 gebildet ist. An der Innenseite dieses Abschlusses 32 liegt, wie aus Fig. 1 ersichtlich, das Sensorelement 60 an. Durch den Abschluss 32 wird verhindert, dass vom Messende 22 Dämpfe oder sonstige Verunreinigungen in das Innere 28 des Sensors eindringen können. Dies stellt einen erheblichen Vorteil im Vergleich zum Stand der Technik dar.

Gemäß einem weiteren wesentlichen Gedanken der Erfindung ist das Anschlussstück 40 so am Anschlussende 24 der Gehäusehülse 20 angebracht, dass das Anschlussstück 40 mit der Innenauskleidung 30 dichtend abschließt. Auf diese Weise wird ein wesentliches Ziel der Erfindung, nämlich die Anzahl der Gehäusezusammenfügungen und demgemäß die Anzahl der abzudichtenden Übergänge, zu minimieren, erreicht.

Mit der erfindungsgemäßen Konstruktion wird demnach nicht versucht, die Qualität der Gehäusezusammenfügungen als solcher zu verbessern. Erfindungsgemäß wurde erkannt, dass grundsätzlich jede Gehäusezusammenfügung eine potentielle Schwachstelle darstellt und deshalb unter dem Gesichtspunkt einer möglichst dichten Kapselung prinzipiell ungünstig ist. Der wesentliche erfindungsgemäße Ansatz besteht deshalb darin, die Anzahl der Zusammenfügungen von vornherein auf ein Minimum zu reduzieren.

Wie die Innenauskleidung 30 in die Gehäusehülse 20, ist auch der Anschlusskörper 50 in die Anschlusshülse 42 durch Spritzguss eingebracht. Der Anschlusskörper 50 besteht aus einem lichtleitenden Kunststoff, damit optische Informationen von den Leuchtdioden 74 nach außen geleitet werden können. Hierzu sind in der Anschlusshülse 42 eine Mehrzahl von Öffnungen 49 vorhanden. Im gezeigten Ausführungsbeispiel ist die Anschlusshülse 42 so gebildet, dass der Anschlusskörper 50 die Ausnehmungen 49 ausfüllt und auf diese Weise transparente Fenster bildet.

An einem vorderen Ende des Anschlussstücks 40 steht der Anschlusskörper 50 über die Anschlusshülse 42 vor und bildet eine Überkragung 56. Wenn in einer aufzuschraubenden Überwurfmutter Öffnungen gebildet sind, können dort wegen der lichtleitenden Eigenschaften des Anschlusskörpers 50 ebenfalls optische Informationen von einem Benutzer abgelesen werden.

Die Gehäusehülse 20 und die Anschlusshülse 42 stoßen in einem Bereich 46 aneinander und werden dort nach der Montage miteinander unlösbar verbunden, vorzugsweise verschweißt. Dies kann insbesondere durch Laserschweißen erfolgen, wodurch die durch das Schweißen bedingte Erwärmung lokal weitestgehend begrenzt ist und deshalb die Dichtung insgesamt nicht beeinträchtigt wird.

Im gezeigten Beispiel wird bei der Fertigung eine umlaufende Schweißnaht 90 gebildet, so dass hierdurch die Abdichtung insgesamt weiter verbessert werden kann.

Eine Vorfixierung der Anschlusshülse 42 bezüglich der Gehäusehülse 20 wird durch einen an der Anschlusshülse 42 gebildeten Ansatz 48 mit reduziertem Außendurchmesser, der in die Gehäusehülse 20 hineinragt und von dieser geführt wird, erzielt. Zum Bereitstellen einer möglichst guten Abdichtung zwischen der Gehäusehülse 20 und dem Anschlussstück 40 ist ein Dichtring 80 vorgesehen. Eine definierte Positionierung dieses Dichtrings 80 wird durch einen Rohransatz 52 des Anschlusskörpers 50 ermöglicht. Wie aus Fig. 4 ersichtlich, wird der Dichtring 80 vor der Montage auf den Rohransatz 52 aufgeschoben und anschließend wird das Anschlussstück 40 mit dem Dichtring 80 an das Anschlussende 24 der Gehäusehülse 20 angesetzt und die Anschlusshülse 42 wird mit der Gehäusehülse 20 verschweißt. Die Gehäusehülse 20 und das zugeordnet Anschlussstück 40 sind demnach so gestaltet, dass sie sich im montierten Zustand teilweise überdecken und überlappen und durch eine kleinstmögliche Anzahl von Dichtungen, vorzugsweise durch nur eine einzige funktionsmäßige Dichtung, die im Bereich der Überdeckung angeordnet ist, dicht verschlossen sind.

Wie aus Fig. 1 ersichtlich, wird ein definierter Aufnahmeraum für den Dichtring 80 bereitgestellt durch einen am anschlussseitigen Ende der Innenauskleidung 30 gebildeten Bereich 34 mit reduzierter Wandstärke. Damit eine Kupplung polrichtig auf die Kontaktstifte 76 aufgesteckt werden kann, ist außerdem an der Innenseite des Anschlusskörpers eine Kodierrippe 58 vorgesehen, welche mit einer entsprechend geformten Nut in einem Kupplungselement in Eingriff kommt.

Sowohl die Innenauskleidung 30 wie auch der Anschlusskörper 50 können aus einem elastomeren Werkstoff ausgebildet sein.

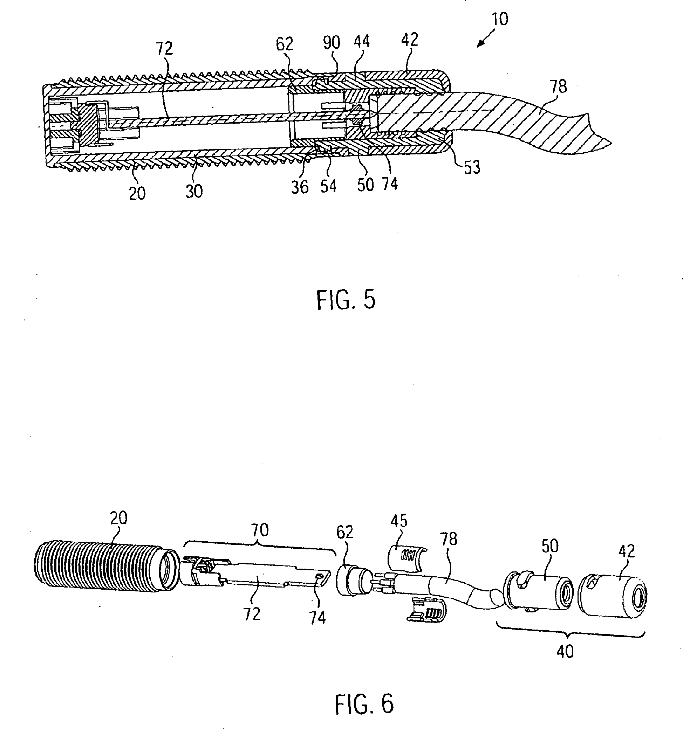

In den Figuren 5 und 6 ist ein zweites Ausführungsbeispiel des erfindungsgemäßen Sensors 10 gezeigt. In dieser Ausführungsform ist das Anschlussstück 40 als Kabelabgang für das Kabel 78 ausgelegt.

Im Folgenden wird lediglich auf die Unterschiede zwischen dieser Ausführungsform und der Ausführungsform der Figuren 1 bis 4 eingegangen. Hierbei sind gleiche Komponenten jeweils mit denselben Bezugszeichen versehen.

Zusätzlich ist in diesen Figuren eine Ausführungsform dargestellt, die ohne einen zusätzlichen Dichtring 80 eine ausreichende Dichtwirkung erzielt.

Zu diesem Zweck ist am Anschlusskörper 50 in dem Bereich, in dem er über die Anschlusshülse 42 hinaussteht, eine Dichtlippe 54 ausgebildet. Beim Zusammensetzen des Sensors 10, wobei das Anschlussstück 40 auf bzw. in die Gehäusehülse 20 geschoben wird, wird auch der Bereich des Anschlusskörpers 50, an dem die Dichtlippe 54 ausgebildet ist, in die Gehäusehülse 20 hineingeschoben. In der Innenauskleidung 30 der Gehäusehülse 20 ist wiederum ein Eingriffsbereich 36 für die Dichtlippe 54 ausgebildet, in den die Dichtlippe 54 eingreift.

Der Anschlusskörper 50 ist in der hier gezeigten Ausführungsform etwas unterschiedlich zu dem Anschlusskörper 50 der ersten Ausführungsform der Figuren 1 bis 4 ausgebildet. Er weist in seinem hinteren Bereich eine umlaufende Dichteinrichtung 53 auf, die mit dem Kabelmantel des Kabels 78 zum Abdichten des Innenraums 28 des Sensors vorgesehen ist.

Das Kabel 78 ist mit seinen elektrischen Leitungen bis auf die elektrische Baugruppe 70, insbesondere die Leiterplatte 72, weitergeführt und dort mit den vorhandenen Bauteilen verbunden. Um diese Verbindung von Zug zu entlasten, ist zusätzlich eine zweiteilige Zugentlastung 45 vorgesehen. Diese wird um das Kabel 78 angebracht und anschließend in das Anschlussstück 40 eingeführt. Hierbei kommt sie im Anschlusskörper 50 zu liegen, welcher wiederum ausgebildet ist, um die Zugentlastung 45 sicher zu halten. Wie in Figur 5 dargestellt, befinden sich die LEDs 74 unterhalb der Zugentlastung 45, so dass diese auch lichtleitend, beispielsweise transparent ausgeführt ist, um die Lichtsignale der LEDs 74 nach außen weiter zu leiten.

Um eine weitere Fixierung des Kabels 78 und der elektrischen Baugruppe 70 zu erleichtern, ist ein Stützring 62 vorgesehen, welcher in zusammengebautem Zustand im Kontaktbereich der Gehäusehülse 20 mit dem Anschlussstück 40 positioniert ist. Der Stützring 62 stützt zum einen die Dichtlippe 54, damit sie eine abdichtende Verbindung mit dem Eingriffsbereich 36 ausbildet, zum anderen dient sie auch zu einer sichereren Platzierung der elektronischen Baugruppe 70.

Mit der vorliegenden Erfindung wird ein neuartiger elektronischer Sensor bereitgestellt, bei dem durch eine reduzierte Anzahl von Gehäusezusammenfügungen besonders gute Eigenschaften im Hinblick auf die Dichtigkeit erreicht werden. Die erfindungsgemäßen Sensoren sind besonders vorteilhaft einsetzbar in Bereichen, bei denen mit einem hohen Eintrag von Verunreinigungen zu rechnen ist, beispielsweise in der lebensmittelverarbeitenden Industrie.

## Patentansprüche

1. Elektronischer Sensor, insbesondere induktiver Sensor,
mit einer Gehäusehülse (20),
mit einem Sensorelement (60) zum Messen einer physikalischen Messgröße, welches an einem Messende (22) der Gehäusehülse (20) angeordnet ist,
mit einer in der Gehäusehülse (20) angeordneten elektronischen Baugruppe (70),
und mit einem Anschlussstück (40), welches an einem dem Messende (22) gegenüberliegenden Anschlussende (24) der Gehäusehülse (20) angeordnet ist,
wobei die Gehäusehülse (20) mit einer Innenauskleidung (30) aus Kunststoff versehen ist, welche am Messende (22) der Gehäusehülse (20) geschlossen ist,
**dadurch gekennzeichnet**
**dass** die Innenauskleidung (30) bis zum Anschlussende (24) der Gehäusehülse (20) soweit durchreicht, dass sich das Anschlussstück (40) mit der Innenauskleidung (30) in einem dichtungsmäßigen Eingriff befindet.

2. Sensor nach Anspruch 1,
**dadurch gekennzeichnet,**
**dass** das Anschlussstück (40) eine insbesondere mit der Gehäusehülse (20) zu verbindende, Anschlusshülse (42) und einen Anschlusskörper (50) aus Kunststoff aufweist.

3. Sensor nach Anspruch 1 oder 2,
**dadurch gekennzeichnet,**
**dass** die Anschlusshülse (42) Ausnehmungen (49) aufweist zum Bilden von Fenstern für optische Informationen aus dem Inneren des Sensors.

4. Sensor nach einem der Ansprüche 1 bis 3,
**dadurch gekennzeichnet,**
**dass** der Anschlusskörper (50) und/oder die Innenauskleidung (30) aus einem lichtleitenden Kunststoff gebildet ist.

5. Sensor nach einem der Ansprüche 1 bis 4,
**dadurch gekennzeichnet,**
**dass** die Innenauskleidung (30) aus einem LCP-Material gebildet ist, welches eine Wasserdampftransmissionsrate von kleiner als 0,1 g x mm/m² x Tag, besonders bevorzugt kleiner als 0,01 g x mm/m² x Tag, und/oder eine Sauerstoff-Permeabilität von kleiner als 0,1 cm³ x mm/m² x Tag x atm, besonders bevorzugt kleiner als 0,01 cm³ x mm/m² x Tag x atm, aufweist.

6. Sensor nach einem der Ansprüche 1 bis 5,
**dadurch gekennzeichnet,**
**dass** der Anschlusskörper (50) in die Anschlusshülse (42) und/oder die Innenauskleidung (30) in die Gehäusehülse (20) durch Spritzguss eingebracht ist.

7. Sensor nach einem der Ansprüche 1 bis 6,
**dadurch gekennzeichnet,**
**dass** die Gehäusehülse (20) und die Anschlusshülse (42) einander überlappen.

8. Sensor nach einem der Ansprüche 1 bis 7,
**dadurch gekennzeichnet,**
**dass** durch die Innenauskleidung (30) im Bereich des Messendes (22) eine Aufnahme für das Sensorelement (60) gebildet ist.

9. Sensor nach einem der Ansprüche 1 bis 8,
**dadurch gekennzeichnet,**
**dass** das Anschlussstück (40) als Steckverbinder oder als Kabelabgang ausgebildet ist.

10. Sensor nach Anspruch 9,
**dadurch gekennzeichnet,**
**dass** am Anschlusskörper (50) Dichteinrichtungen (53) zum abgedichteten Einführen eines Kabels ausgebildet sind.

11. Sensor nach einem der Ansprüche 9 oder 10,
**dadurch gekennzeichnet,**
**dass** im Anschlussstück (40) zugentlastende Elemente (45) vorhanden sind.

12. Sensor nach einem der Ansprüche 1 bis 11,
**dadurch gekennzeichnet,**
**dass** eine Leiterplatte (72) der elektronischen Baugruppe (70) in einem Bereich, in dem LEDs angeordnet sind, in den Anschlusskörper hineinragt.

13. Sensor nach einem der Ansprüche 1 bis 12,
**dadurch gekennzeichnet,**
**dass** ein Dichtring (80) zwischen der Innenauskleidung (30) und dem Anschlussstück (40) vorhanden ist.

14. Sensor nach einem der Ansprüche 1 bis 13,
**dadurch gekennzeichnet,**
**dass** der Anschlusskörper (50) einen in das Innere (28) der Innenauskleidung (30) hineinragenden Rohransatz (52) aufweist, dessen Außenseite eine Anlagefläche für einen Dichtring (80) bildet.

15. Sensor nach Anspruch 14,
**dadurch gekennzeichnet,**
**dass** ein Endbereich der Innenauskleidung (30) mit dem Rohransatz (52) in einem Dichtungsbereich (34) überlappt und
**dass** die Innenauskleidung (30) im Dichtungsbereich (34) zum Bilden eines Aufnahmeraums für einen Dichtring (80) eine reduzierte Dicke aufweist.

16. Sensor nach einem der Ansprüche 1 bis 15,
**dadurch gekennzeichnet,**
**dass** am Anschlusskörper (50) eine Dichtlippe (54) ausgebildet ist und
**dass** an der Innenauskleidung (30) ein mit der Dichtlippe (54) zusammenwirkender Eingriffsbereich (36) vorhanden ist.

17. Sensor nach einem der Ansprüche 1 bis 16,
**dadurch gekennzeichnet,**
**dass** als Fortsetzung des Anschlusskörpers (50) in Richtung Messende (22) in die Innenauskleidung (30) ein Stützring (62) eingebracht ist.

18. Verfahren zur Herstellung eines Sensors, insbesondere nach einem der Ansprüche 1 bis 17,
bei dem eine Gehäusehülse (20) mit einer Innenauskleidung (30) versehen wird, wobei die Innenauskleidung (30) an einem Messende (22) der Gehäusehülse (20) geschlossen ist und bis zu einem dem Messende (22) gegenüberliegenden Anschlussende (24) der Gehäusehülse (20) durchreicht,
bei dem ein Sensorelement (60) zum Messen einer physikalischen Messgröße und eine elektronische Baugruppe (70) in die Gehäusehülse (20) eingeführt wird, bei dem ein Anschlussstück (40) an das Anschlussende (24) der Gehäusehülse (20) angesetzt wird und
bei dem eine Verbindung zwischen dem Anschlussstück (40) und dem Anschlussende (24) der Gehäusehülse (20) so hergestellt wird, dass das Anschlussstück (40) mit der Innenauskleidung (30) in einen dichtenden Eingriff kommt.

19. Verfahren nach Anspruch 18,
**dadurch gekennzeichnet,**
**dass** das Anschlussstück (40) eine Anschlusshülse (42) aufweist, welche mit der Gehäusehülse (20) verbunden wird.

20. Verfahren nach einem der Ansprüche 18 oder 19,
**dadurch gekennzeichnet,**
**dass** die Anschlusshülse (42) mit der Gehäusehülse (20), insbesondere mit einer umlaufenden Schweißnaht (90), verschweißt wird und/oder
**dass** die Anschlusshülse (42) beim Zusammenbau des Sensors (10) mit der Gehäusehülse (20) verrastet wird.

## Claims

1. Electronic sensor, particularly inductive sensor,
having a casing sleeve (20),
having a sensor element (60) for measuring a physical measurand, the sensor element (60) being placed on a measurement end (22) of the casing sleeve (20),
having an electronic module (70) located in the casing sleeve (20), and
having a connector (40), which is placed on a connection end (24) of the casing sleeve (20) opposite to the measurement end (22),
wherein the casing sleeve (20) is provided with a plastic internal lining (30), which is closed at the measurement end (22) of the casing sleeve (20),
**characterized in that**
the internal lining (30) extends to the connection end (24) of the casing sleeve (20) to such an extent that the connector (40) is in sealing engagement with the internal lining (30).

2. Sensor according to claim 1,
**characterized in that**
the connector (40) has a connection sleeve (42) more particularly to be connected to the casing sleeve (20) and a connection body (50) made from plastic.

3. Sensor according to claims 1 or 2,
**characterized in that**
the connection sleeve (42) has recesses (49) for forming windows for optical information from the sensor interior.

4. Sensor according to one of the claims 1 to 3,
**characterized in that**
the connection body (50) and/or the internal lining (30) is made from a light conducting plastic.

5. Sensor according to one of the claims 1 to 4,
**characterized in that**
the internal lining (30) is made from a LCP-material which has a water vapour transmission rate of smaller than 0,1 g x mm/m² x day, preferably smaller than 0,01g x mm/m² x day, and/or an oxygen permeability of smaller than 0,1cm³ x mm/m² x day x atm, preferably smaller than 0,01 cm³ x mm/m² x day x atm.

6. Sensor according to one of the claims 1 to 5,
**characterized in that**
the connection body (50) is injection moulded into the connection sleeve (42) and/or that the internal lining (30) is injection moulded into the casing sleeve (20).

7. Sensor according to one of the claims 1 to 6,
**characterized in that**
the casing sleeve (20) and the connection sleeve (42) overlap one another.

8. Sensor according to one of the claims 1 to 7,
**characterized in that**
in the region of the measurement end (22) the internal lining (30) forms a receptacle for the sensor element (60).

9. Sensor according to one of the claims 1 to 8,
**characterized in that**
the connector (40) is in the form of a plug and socket connection or of an outgoing cable.

10. Sensor according to claim 9,
**characterized in that**
in the connection body (50) sealing devices (53) for the sealed insertion of a cable are provided.

11. Sensor according to one of the claims 9 or 10,
**characterized in that**
in the connector (40) are provided tension-relieving elements (45).

12. Sensor according to one of the claims 1 to 11,
**characterized in that**
a printed circuit board (72) of the electronic module (70) projects into the connection body in an area where LEDs are located.

13. Sensor according to one of the claims 1 to 12,
**characterized in that**
there is a sealing ring (80) between the internal lining (30) and the connector (40).

14. Sensor according to one of the claims 1 to 13,
**characterized in that**
the connection body (50) has a tubular socket (52) projecting into the interior (28) of the internal lining (30) and whose outside forms a contact surface for a sealing ring (80).

15. Sensor according to claim 14,
**characterized in that**
an end region of the internal lining (30) overlaps with the tubular socket (52) in a sealing area (34) and
that in said sealing area (34) the internal lining (30) has a reduced thickness for forming a reception area for a sealing ring (80).

16. Sensor according to one of the claims 1 to 15,
**characterized in that**
at the connection body (50) a sealing lip (54) is formed and
that at the internal lining (30) an engagement region (36) cooperating with the sealing lip (54) is present.

17. Sensor according to one of the claims 1 to 16,
**characterized in that**
as an extension of the connection body (50) in the direction of the measurement end (22) a supporting ring (62) is inserted into the internal lining (30).

18. Method for the manufacture of a sensor, particularly according to one of the claims 1 to 17,
where a casing sleeve (20) is provided with an internal lining (30), where the internal lining (30) is closed at a measurement end (22) of the casing sleeve (20) and extends through to a connection end (24) of the casing sleeve (20) opposite to the measurement end (22),
where a sensor element (60) for measuring a physical measurand and an electronic module (70) are inserted into the casing sleeve (20),
where a connector (40) is attached to the connection end (24) of the casing sleeve (20) and
where a connection between the connector (40) and the connection end (24) of the casing sleeve (20) is made in such a way that the connector (40) comes into sealing engagement with the internal lining (30).

19. Method according to claim 18,
**characterized in that**
the connector (40) has a connection sleeve (42), which is connected to the casing sleeve (20).

20. Method according to one of the claims 18 or 19,
**characterized in that**
the connection sleeve (42) is welded to the casing sleeve (20), in particular with a circumferential welding seam (90), and/or
that the connection sleeve (42) is locked to the casing sleeve (20) on assembling the sensor (10).

## Revendications

1. Capteur électronique, en particulier capteur inductif,
avec une douille formant boîtier (20),
avec un élément capteur (60) pour mesurer une grandeur physique de mesurage, qui est placé à une extrémité de mesure (22) de la douille formant boîtier (20),
avec un sous-ensemble électronique (70) placé dans la douille formant boîtier (20),
et avec un élément de raccordement (40) qui est placé à une extrémité de raccordement (24) de la douille formant boîtier (20) opposée à l'extrémité de mesure (22),
dans lequel la douille formant boîtier (20) est munie d'une garniture intérieure (30) en matière plastique qui est fermée à l'extrémité de mesure (22) de la douille formant boîtier (20),
***caractérisé en ce que***
la garniture intérieure (30) va jusqu'à l'extrémité de raccordement (24) de la douille formant boîtier (20), de telle sorte que l'élément de raccordement (40) se trouve en prise d'étanchéité avec la garniture intérieure (30).

2. Capteur selon la revendication 1,
***caractérisé en ce que***
l'élément de raccordement (40) comprend une douille de raccordement (42), devant en particulier être reliée à la douille formant boîtier (20), et un corps de raccordement (50) en matière plastique.

3. Capteur selon la revendication 1 ou 2,
***caractérisé en ce que***
la douille de raccordement (42) présente des évidements (49) pour former des fenêtres pour des informations optiques provenant de l'intérieur du capteur.

4. Capteur selon l'une quelconque des revendications 1 à 3,
***caractérisé en ce que***
le corps de raccordement (50) et/ou la garniture intérieure (30) sont formés dans une matière plastique conduisant la lumière.

5. Capteur selon l'une quelconque des revendications 1 à 4,
***caractérisé en ce que***
la garniture intérieure (30) est formée d'un matériau LCP qui présente un taux de transmission de vapeur d'eau inférieur à 0,1 g x mm/m² x jour, en particulier de préférence inférieur à 0,01 g x mm/m² x jour, et/ou une perméabilité à l'oxygène inférieure à 0,1 cm³ x mm/m² x jour x atm, de manière particulièrement préférée inférieure à 0,01 cm³ x mm/m² x jour x atm.

6. Capteur selon l'une quelconque des revendications 1 à 5,
***caractérisé en ce que***
le corps de raccordement (50) est logé dans la douille de raccordement (42) et/ou la garniture intérieure (30) dans la douille formant boîtier (20) par moulage par injection.

7. Capteur selon l'une des revendications 1 à 6,
***caractérisé en ce que***
la douille formant boîtier (20) et la douille de raccordement (42) se chevauchent.

8. Capteur selon l'une quelconque des revendications 1 à 7,
***caractérisé en ce qu'***
un logement pour l'élément capteur (60) est formé par la garniture intérieure (30) au niveau de l'extrémité de mesure (22).

9. Capteur selon l'une quelconque des revendications 1 à 8,
***caractérisé en ce que***
l'élément de raccordement (40) est conformé en connecteur à fiche ou en sortie de câble.

10. Capteur selon la revendication 9,
***caractérisé en ce que***
sur le corps de raccordement (50) sont formés des dispositifs d'étanchéité (53) pour introduire un câble de manière étanche.

11. Capteur selon l'une quelconque des revendications 9 ou 10,
***caractérisé en ce que***
des éléments (45) de décharge de traction sont présents dans l'élément de raccordement (40).

12. Capteur selon l'une quelconque des revendications 1 à 11,
***caractérisé en ce qu'***
un circuit imprimé (72) du sous-ensemble électronique (70) forme saillie dans le corps de raccordement dans une zone dans laquelle sont placées des DELs.

13. Capteur selon l'une quelconque des revendications 1 à 12,
***caractérisé en ce qu'***
une bague d'étanchéité (80) est présente entre la garniture intérieure (30) et l'élément de raccordement (40).

14. Capteur selon l'une quelconque des revendications 1 à 13,
***caractérisé en ce que***
le corps de raccordement (50) présente une embase tubulaire (52) formant saillie dans l'intérieur (28) de la garniture intérieure (30), et dont la face extérieure forme une surface d'appui pour une bague d'étanchéité (80).

15. Capteur selon la revendication 14,
***caractérisé***
***en* ce qu'**une zone d'extrémité de la garniture intérieure (30) se chevauche avec l'embase tubulaire (52) dans une zone d'étanchéité (34), et
***en* ce *que*** la garniture intérieure (30) présente dans la zone d'étanchéité une épaisseur réduite pour former une zone de logement pour une bague d'étanchéité (80).

16. Capteur selon l'une quelconque des revendications 1 à 15,
***caractérisé***
***en ce que*** sur le corps de raccordement (50) est formée une lèvre d'étanchéité (54) et
***en ce que*** sur la garniture intérieure (30) se trouve une zone de prise (36) coopérant avec la lèvre d'étanchéité (54).

17. Capteur selon l'une quelconque des revendications 1 à 16,
***caractérisé en ce qu'***
une bague d'appui (62) est insérée dans la garniture intérieure (30) en tant que prolongement du corps de raccordement (50) en direction de l'extrémité de mesure (22).

18. Procédé de fabrication d'un capteur, en particulier selon l'une quelconque des revendications 1 à 17,
dans lequel une douille formant boîtier (20) est munie d'une garniture intérieure (30), la garniture intérieure (30) étant fermée à une extrémité de mesure (22) de la douille formant boîtier (20) et allant jusqu'à une extrémité de raccordement (24) de la douille formant boîtier (20) opposée à l'extrémité de mesure (22),
dans lequel un élément capteur (60) pour mesurer une grandeur physique de mesurage et un sous-ensemble électronique (70) sont introduits dans la douille formant boîtier (20),
dans lequel un élément de raccordement (40) est appliqué sur l'extrémité de raccordement (24) de la douille formant boîtier (20), et
dans lequel une jonction entre l'élément de raccordement (40) et l'extrémité de raccordement (24) de la douille formant boîtier (20) est réalisée de telle manière que l'élément de raccordement (40) se met en prise d'étanchéité avec la garniture intérieure (30).

19. Procédé selon la revendication 18,
***caractérisé en ce que***
l'élément de raccordement (40) comprend une douille de raccordement (42) qui est reliée à la douille formant boîtier (20).

20. Procédé selon l'une quelconque des revendications 18 ou 19,
***caractérisé***
***en ce que*** la douille de raccordement (42) est soudée à la douille formant boîtier (20), en particulier avec un joint de soudure périphérique (90), et/ou
***en ce que*** la douille de raccordement (42) est encliquetée avec la douille formant boîtier (20) lors de l'assemblage du capteur (10).
